# EUROPÄISCHE PATENTANMELDUNG

(11) **EP 4 431 798 A1**
(43) Veröffentlichungstag der Anmeldung: **18.09.2024**
(21) Anmeldenummer: 23162017.0
(22) Anmeldetag: 15.03.2023
(51) Int. Cl.: F21V 21/08, F16B 2/22, F16B 45/00

(54) **BEFESTIGUNGSSYSTEM**

(71) Anmelder: John, Jürgen, 76835 Flemlingen (DE)
(72) Erfinder: John, Jürgen, 76835 Flemlingen (DE)
(74) Vertreter: Patentanwälte Dr. Keller, Schwertfeger Partnerschaft mbB

(57) **Zusammenfassung**

Die vorliegende Erfindung betrifft ein Befestigungssystem umfassend eine Montagehilfe (12; 412) und ein Befestigungsmodul (14; 114; 214; 314), wobei die Montagehilfe (12; 412) ein Führungsmodul (16; 416) mit einem Führungselement (22; 422) sowie ein Basismodul (18; 418) mit einer Arretiervorrichtung (36; 436) umfasst, wobei das Basismodul (18; 418) mit dem Befestigungsmodul (14; 114; 214; 314; 414) fest verbunden ist, wobei an dem Basismodul (18; 418) oder dem Befestigungsmodul (14; 114; 214; 314; 414) wenigstens ein Haltelement (52; 152; 252; 352) vorgesehen ist und wobei das Basismodul (18; 418) und das Führungsmodul (16; 416) mittels einer magnetischen Verbindung lösbar miteinander verbunden sind.

## Beschreibung

Die vorliegende Erfindung betrifft ein Befestigungssystem mit einer Montagehilfe und einem Befestigungsmodul.

Sowohl im privaten als auch im gewerblichen Bereich besteht immer wieder die Anforderung, Gegenstände, die nicht allzu schwer sind, in einer Höhe außerhalb der natürlichen Reichweite einer Person an Objekten bzw. Trägerelementen anzubringen. Beispielshaft sei hier das Anbringen von Lichterketten oder Lampions an Bäumen, Sträuchern oder Gebäudeteilen zu Dekorationszwecken oder das Befestigen von Sonnensegeln erwähnt. Üblicherweise werden hierzu entsprechende Hilfsmittel, insbesondere Steighilfen wie etwa Leitern oder Stühle verwendet, um an die gewünschte Stelle heranzukommen, an der der Gegenstand aufgehängt werden soll. Erfahrungsgemäß ist das Unfallrisiko bei der Verwendung von Steighilfen jedoch sehr hoch.

Sollen beispielsweise Lichterketten in einer bestimmten Höhe entlang eines Objekts bzw. Trägerelements befestigt werden, führt dies dazu, dass der Anwender immer wieder auf die Steighilfe steigen muss, um ein Teil einer Lichterkette an dem Objekt bzw. Trägerelement zu befestigen. Anschließend muss der Anwender wieder von der Steighilfe steigen, diese verschieben und den Vorgang wiederholen. Dieses Verfahren ist zum einen recht kräftezehrend und zum anderen sehr risikobehaftet, da jedes Mal sichergestellt werden muss, dass die Steighilfe, insbesondere die Leiter tatsächlich stabil aufgestellt ist. Bei jedem Aufsteigen auf eine Steighilfe bzw. jedem Abstieg von der Steighilfe besteht das Risiko, sich dabei zu verletzen.

Es besteht daher der Wunsch, die Befestigung von leichteren Gegenständen in einer Höhe, die außerhalb der natürlichen Reichweite des Anwenders liegt, einfacher und sicherer zu gestalten.

Es ist daher Aufgabe der vorliegenden Erfindung, ein Befestigungssystem mit einer Montagehilfe und einem Befestigungsmodul bereitzustellen, welches einfach und sicher für das Befestigen von leichteren Gegenständen an Objekten bzw. Trägerelementen außerhalb der natürlichen Reichweite des Anwenders einsetzbar ist. Unter leichteren Gegenständen werden solche Gegenstände verstanden, die üblicherweise von einer Person ohne technische Hilfsmittel angehoben werden können. Üblicherweise handelt es sich um Gegenstände, die nicht schwerer als 10 kg, vorzugsweise nicht schwerer als 5 kg sind. Ein Objekt, auch Trägerelement genannt, kann beispielsweise ein Gebäudeteil, ein großer Gegenstand wie eine Stange, insbesondere Fahnenstange, oder eine Pflanze wie etwa ein Baum oder ein Strauch sein.

Erfindungsgemäß wird die Aufgabe gelöst durch ein Befestigungssystem mit den Merkmalen des Anspruchs 1, insbesondere mit einem Befestigungssystem umfassend eine Montagehilfe und ein Befestigungsmodul, wobei die Montagehilfe ein Führungsmodul mit einem Führungselement sowie ein Basismodul mit einer Arretiervorrichtung umfasst, wobei das Basismodul mit dem Befestigungsmodul fest verbunden ist, wobei an dem Basismodul oder dem Befestigungsmodul wenigstens ein Haltelement vorgesehen ist und wobei das Basismodul und das Führungsmodul mittels einer magnetischen Verbindung lösbar miteinander verbunden sind.

Gemäß der vorliegenden Erfindung ist ein Befestigungsmodul geeignet, eine stabile Verbindung mit einem Trägerelement herzustellen. Die Verbindung zwischen Befestigungsmodul und Trägerelement ist vorzugsweise lösbar, insbesondere reversibel ausgebildet. Im Rahmen der Erfindung sind jedoch auch feste Verbindungen zwischen Befestigungsmodul und Trägerelement erfasst.

Das Halteelement dient dazu, einen Gegenstand an dem Befestigungssystem lösbar oder nicht lösbar zu befestigen.

Während der Montage, d.h. in einem Montagezustand, sind das Führungsmodul, das Basismodul und das Befestigungsmodul fest miteinander verbunden. Ansonsten, insbesondere nach dem Befestigen des Befestigungsmoduls an einem Trägerelement, bilden das Führungsmodul und das aus Basismodul und Befestigungsmodul bestehende Bauteil getrennte Einheiten. Das Basismodul und das Befestigungsmodul können einstückig miteinander verbunden sein oder aus zwei fest miteinander verbundenen Bauteilen bestehen.

Bei einer beispielhaften Anwendung, bei der ein Gegenstand an einem entfernt liegenden Trägerelement angebracht werden soll, ist der zu befestigende Gegenstand in dem Montagezustand mittels des Halteelements fest an dem Befestigungssystem angebracht. Das Basismodul ist aufgrund der magnetischen Verbindung zwischen Basismodul und Führungsmodul fest mit dem Führungsmodul verbunden. Wird das Führungselement betätigt, insbesondere manuell betätigt, kann das Befestigungsmodul an die gewünschte Montageposition gebracht werden. Ist das Befestigungsmodul dann an der gewünschten Stelle am Trägerelement befestigt, kann das Führungselement wieder aus dem Basismodul herausgezogen werden, so dass sich die magnetische Verbindung zwischen Führungsmodul und Basismodul löst. Das Befestigungsmodul verbleibt zusammen mit dem Basismodul und dem an dem Halteelement befestigten Gegenstand an der gewünschten Stelle am Trägerelement.

Das beschriebene Befestigungssystem ermöglicht es dem Anwender, leichtere Gegenstände in einer Höhe, die außerhalb der natürlichen Reichweite des Anwenders liegt, einfach und sicher anzubringen.

Die magnetische Verbindung bewirkt, dass das Basismodul und das Führungsmodul fest miteinander verbunden sind. Allerdings besteht bei einer magnetischen Verbindung die Gefahr, dass sich die miteinander magnetisch verbundenen Gegenstände unter mechanischem Einfluss lösen und/oder um die Verbindungsachse der magnetischen Verbindung drehen.

Ein gegenüber dem Führungsmodul verdrehbares Basismodul und somit ein gegenüber dem Führungsmodul verdrehbares Befestigungsmodul erschweren das Ausrichten und Befestigen des Befestigungsmoduls an dem gewünschten Trägerelement in einer fernen Höhe. Auch bei der Demontage ist ein Verdrehen des Führungsmoduls gegenüber dem Basismodul bzw. Befestigungsmodul hinderlich. Bei einer bevorzugten Ausführungsform sind das Führungsmodul und das Basismodul mittels der lösbaren magnetischen Verbindung und mittels einer zusätzlichen lösbaren formschlüssigen Verbindung miteinander verbindbar. Mittels der formschlüssigen Verbindung zwischen dem Basismodul und dem Führungsmodul wird verhindert, dass sich das Basismodul gegenüber dem Führungsmodul unter unerwünschtem mechanischem Einfluss löst. Zusätzlich kann die formschlüssige Verbindung verhindern, dass sich das Basismodul gegenüber dem Führungsmodul verdreht.

Zur Ausbildung einer stabilen magnetischen Verbindung, die dennoch lösbar ist, ist es von Vorteil, dass das Führungsmodul ein erstes magnetisches Element und das Basismodul ein zweites Element, das magnetisierbar oder magnetisch ist, aufweisen oder dass das Basismodul ein erstes magnetisches Element und das Führungsmodul ein zweites Element, das magnetisierbar oder magnetisch ist, aufweisen. Bei dem ersten magnetischen Element handelt es sich um einen Permanentmagneten, insbesondere um ein Element, welches einen ferromagnetischen Stoff umfasst. Bei dem zweiten magnetisierbaren Element handelt es sich um ein Element, welches vorzugsweise einen paramagnetischen Stoff umfasst.

Beispielsweise kann es sich bei dem ersten magnetischen Element um einen Würfel, einen Stab oder eine Platte handeln und bei dem zweiten Element um ein geometrisch geeignetes Gegenstück, insbesondere komplementäres Gegenstück, so dass zwischen dem ersten magnetischen Element und dem zweiten magnetischen Element eine stabile magnetische Verbindung ausgebildet werden kann.

Um eine definierte Verbindung zwischen dem Basismodul und dem Führungsmodul herzustellen, ist es von Vorteil, dass das Führungselement und/oder die Arretiervorrichtung des Basismoduls aus einem nicht magnetisierbaren Material bestehen, so dass die magnetische Verbindung lediglich durch das erste magnetisierbare Element und das zweite Element, das magnetisierbar oder magnetisch ist, gebildet wird.

Vorzugsweise weist das Führungsmodul eine Führungsstange auf, wobei die Führungsstange vorzugsweise eine Teleskopstange ist. Mit Hilfe dieser Ausführungsform ist es möglich, Gegenstände weit außerhalb der natürlichen Reichweite des Anwenders anzubringen. Insbesondere ist es bei dieser Ausführungsform möglich, Gegenstände in einer Höhe anzubringen, die normalerweise ohne Steighilfen wie etwa Stühle oder Leitern nicht erreichbar sind. Das vorliegende Befestigungssystem ist somit deutlich sicherer und kraftsparender als die bisher bekannten Befestigungssysteme, bei denen als Montagehilfe eine Steighilfe nötig ist.

Bei einer bevorzugten Weiterbildung ist das Basismodul haubenartig mit dem Führungsmodul verbindbar. Es ist hierbei bevorzugt, dass das Basismodul einen Hohlraum aufweist, in den zumindest ein Abschnitt des Führungselements eingreifen kann.

Hierdurch kann eine formschlüssige Verbindung bereitgestellt werden, die dafür sorgt, dass die magnetische Verbindung nicht versehentlich gelöst wird. Diese Anordnung hat den Vorteil, dass sie keinen Halt bietet, wenn das Führungsmodul nach unten in Richtung der Schwerkraft aus dem Basismodul herausgezogen wird. Dies führt dazu, dass die Kraft, die notwendig ist, um nach dem Anbringen des Befestigungsmoduls an einem Trägerelement das Führungsmodul aus dem Basismodul herauszuziehen, im Wesentlichen nur die Kraft ist, die zum Lösen der magnetischen Verbindung notwendig ist.

Es ist weiter von Vorteil, dass das Führungselement einen plattenförmigen oder einen stabförmigen Grundkörper aufweist.

Beispielsweise weist das plattenförmige oder stabförmige Führungselement einen vorderen Abschnitt auf, der abgeschrägt, insbesondere spitz oder konisch zulaufend ausgebildet ist, und die Arretiervorrichtung des Basismoduls verfügt über einen Hohlraum, wobei der Hohlraum ausgelegt ist, zumindest den vordersten Teil des vorderen Abschnitts des Führungselements formschlüssig aufzunehmen. Dadurch, dass zumindest der vorderste Teil des vorderen Abschnitts der Führungselement in dem Hohlraum der Arretiervorrichtung des Basismoduls formschlüssig eingreift, wird verhindert, dass sich die magnetische Verbindung versehentlich löst.

Bei dieser Ausführungsform wirkt das Basismodul wie eine Schutzhülle, die über den vorderen Abschnitt des Führungselements gezogen wird.

Wird ein Führungselement gemäß einer bevorzugten Ausführungsform eingesetzt, welches im Querschnitt nicht rund ausgebildet ist, kann zusätzlich eine Verdrehsicherung zwischen Basismodul und Führungsmodul in Bezug auf eine Drehung um die Längsachse des Führungselements bereitgestellt werden. Vorausgesetzt ist hier, dass der Querschnitt des Hohlraums des Basismoduls komplementär zu dem Querschnitt des Führungselements gestaltet ist.

Es ist weiter von Vorteil, dass das Basismodul ein magnetisierbares oder magnetisches Element aufweist, das an der Arretiervorrichtung befestigt ist. So kann mit Hilfe der Arretiervorrichtung nicht nur eine formschlüssige Verbindung, sondern auch eine magnetische Verbindung hergestellt werden.

Bei einer bevorzugten Ausführungsform weist das Basismodul eine Einführhilfe auf. Insbesondere dann, wenn das Befestigungsmodul wieder an der entfernt liegenden Stelle entfernt werden soll, kann es aufgrund der großen Entfernung zwischen der Montagestelle und der Person, die das Befestigungsmodul entfernen möchte, schwierig sein, das Führungsmodul mit dem Basismodul zu verbinden. Eine Einführhilfe, die das Führungselement in Bezug auf die Arretiervorrichtung ausrichtet, kann Abhilfe schaffen. So kann beispielsweise das Basismodul eine Bodenplatte aufweisen, die mit einem plattenförmigen Führungselement wechselwirkt. Ist das Führungselement stabförmig ausgebildet, kann die Arretiervorrichtung des Basismoduls beispielsweise eine trichterförmige Öffnung aufweisen.

Um auf einfache Weise einen Gegenstand an einem gewünschten Trägerelement mittels des Befestigungssystems anzubringen, ist es von Vorteil, dass das Befestigungsmodul ein erstes Befestigungselement geeignet zur Befestigung an einem Trägerelement und das wenigstens eine Halteelement umfasst. Das erste Befestigungselement kann beispielsweise ein Haken oder ein Element einer magnetischen Verbindung sein und dient insbesondere dazu, eine feste, vorzugsweise lösbare Verbindung zwischen dem Befestigungsmodul und dem Trägerelement, an dem der Gegenstand angebracht wird, herzustellen. Als Trägerelemente eignen sich beispielsweise Gebäudeteile wie etwa Dachrinnen, Fahnenstangen oder Bäume. Das wenigstens eine Halteelement an dem Befestigungsmodul dient, wie oben bereits angegeben, dazu, den Gegenstand, beispielsweise eine Lampe, an dem Befestigungsmodul zu halten.

Bei einer alternativen Ausführungsform umfassen das Befestigungsmodul ein erstes Befestigungselement geeignet zur Befestigung an einem Trägerelement und das Basismodul das wenigstens eine Halteelement.

Das wenigstens eine Halteelement kann in beiden Fällen beispielsweise ein Haken oder auch eine Öse sein.

Die Haken bzw. Ösen können zum einen dazu dienen, Gegenstände fest an dem Basismodul oder Befestigungsmodul zu befestigen, um den Gegenstand dann mittels des Befestigungselements fest an einem Trägerelement anzubringen. Zum anderen können die Haken oder Ösen auch verwendet werden, um darin Schnüre oder Seile zu führen, so dass an den Seilen oder Schnüren befestigte Gegenstände auch dann noch zum Befestigungsmodul gebracht werden können, wenn das Befestigungsmodul bereits an seiner bestimmungsgemäßen Position am Trägerelement befestigt ist.

Befindet sich das Befestigungsmodul an der gewünschten Stelle, kann es passieren, dass sich das Befestigungsmodul in einer ungewünschten Weise verdreht. Um hier gegebenenfalls nachjustieren zu können, ist es von Vorteil, dass wenigstens ein mechanisches Steuerungselement vorgesehen ist, welches es ermöglicht, das Befestigungsmodul zu drehen. Das wenigstens eine mechanische Steuerungselement kann in dem Basismodul oder in dem Befestigungsmodul vorgesehen sein. Beispielsweise kann hier eine Öse oder Öffnung in einem der beiden genannten Module vorgesehen sein, durch welche ein Seil geführt wird, welches der Anwender entfernt von den Modulen betätigen kann.

Bei einer bevorzugten Ausführungsform ist in dem Führungselement ein Aufnahmemittel beispielsweise in Form eines Einschnitts oder Schlitzes vorgesehen, um gegebenenfalls nachträglich noch Hilfsmittel zu einem an einem Trägerelement befestigten Befestigungsmodul oder Basismodul zu bringen.

Es versteht sich, dass bei all den beschriebenen Ausführungsformen die Kraft, die notwendig ist, um die magnetische Verbindung zu lösen, geringer ist als die Kraft, die zum Bruch des Befestigungsmoduls und/oder zur Verformung des Trägerelements, an dem das Befestigungsmodul befestigt ist, führt.

Bevorzugte Ausführungsformen werden anhand der beigefügten Zeichnungen näher erläutert, in denen zeigen:
- Fig. 1: ein Befestigungssystem gemäß einer ersten Ausführungsform,
- Fig. 2: ein Führungsmodul der ersten Ausführungsform,
- Fig. 3: ein Basismodul der ersten Ausführungsform,
- Fig. 4: das Führungsmodul und das Basismodul in verbundenem Zustand,
- Fig. 5: ein Befestigungsmodul der ersten Ausführungsform,
- Fig. 6: das in Fig. 5 dargestellte Befestigungsmodul zusammen mit dem Basismodul,
- Fig. 7: eine erste alternative Ausführungsform eines Befestigungsmoduls,
- Fig. 8: eine zweite alternative Ausführungsform eines Befestigungsmoduls,
- Fig. 9: eine dritte alternative Ausführungsform eines Befestigungsmoduls,
- Fig. 10: ein Anwendungsbeispiel für das in Fig. 7 dargestellte Befestigungsmodul
- Fig. 11: ein Befestigungssystem gemäß einer zweiten Ausführungsform.

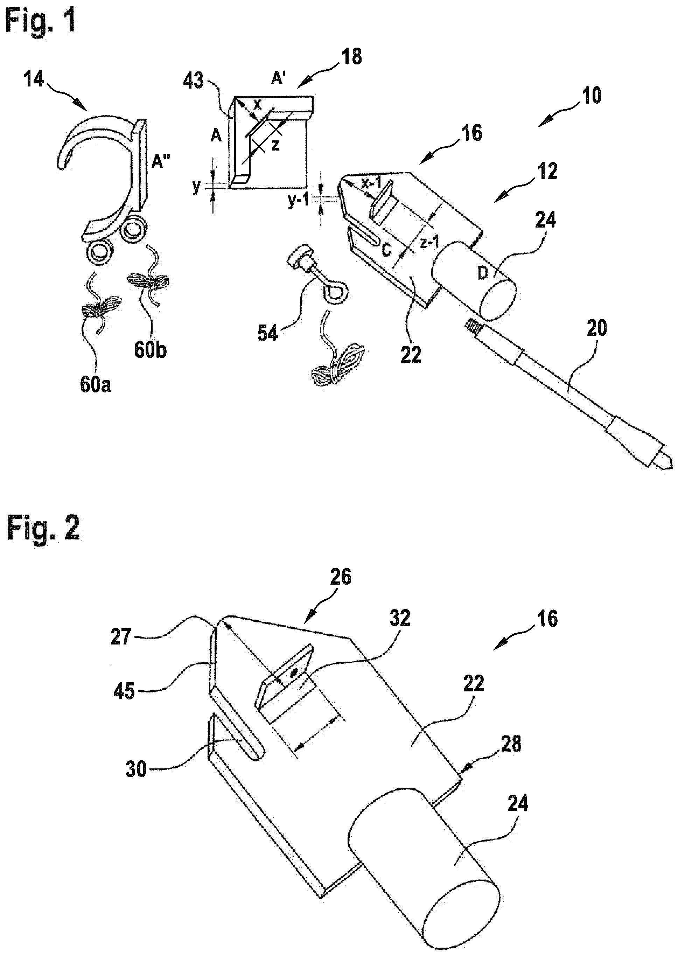

Fig. 1 zeigt eine erste Ausführungsform eines Befestigungssystem 10 mit einer Montagehilfe 12 und einem Befestigungsmodul 14. Die Montagehilfe 12 umfasst ein Führungsmodul 16 und ein Basismodul 18. Weiterhin ist ein Stab in Form eines Teleskopstabs 20 vorgesehen.

Das Führungsmodul 16 ist in Fig. 2 im Detail dargestellt. Das Führungsmodul 16 umfasst ein plattenförmiges Führungselement 22 sowie einen Anschluss 24, geeignet für die Aufnahme des Teleskopstabs 20. Der Teleskopstab 20 kann mittels bekannter Mittel mit dem Anschluss 24 verbunden werden. Beispielsweise kann der Teleskopstab 20 in den Anschluss 24 eingeschraubt, eingerastet oder mit diesem verklemmt werden.

Das Führungselement 22 weist eine axialsymmetrische Grundform auf und verfügt über einen vorderen Abschnitt 26 und einen hinteren Abschnitt 28. Der Anschluss 24 für den Teleskopstab 20 ist an dem hinteren Abschnitt 28 vorgesehen. Der vordere Abschnitt 26 des Führungselements 22 ist spitz zulaufend mit einer Spitze 27 ausgebildet. Die Spitze 27 weist einen Winkel von etwa 90° auf. Im Bereich des vorderen Abschnitts 26 des Führungselements 22 befinden sich ein nach außen offener Schlitz 30 sowie ein magnetisches Element 32 in Form einer ferromagnetischen Metallplatte, die an dem Führungselement 22 befestigt ist und sich senkrecht zum Führungselement 22 erstreckt.

Das Führungselement 22 besteht aus einem nicht magnetisierbaren Material, insbesondere aus Kunststoff.

Die Spitze 27, das Magnetelement 32 und der Anschluss 24 befinden sich auf einer gemeinsamen Längsachse durch das Führungselement 22. Der Schlitz 30 ist parallel zu dieser Achse ausgerichtet.

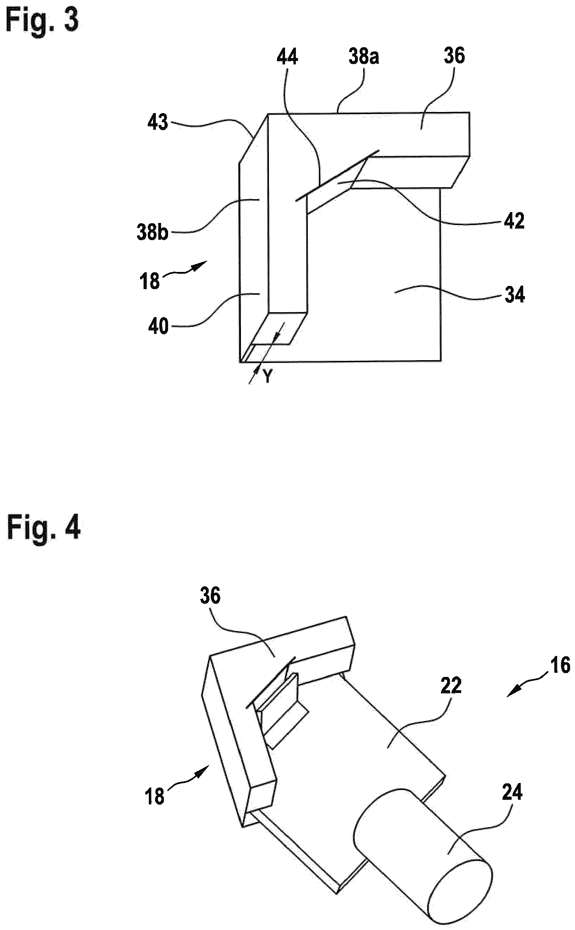

Fig. 3 zeigt das Basismodul 18. Das Basismodul 18 verfügt über eine Bodenplatte 34, die hier quadratisch ausgebildet ist und als Einführhilfe dient, und über eine Arretiervorrichtung 36. Die Arretiervorrichtung 36 umfasst zwei Seitenwände 38a und 38b, die sich an einander angrenzenden Seiten der Bodenplatte 34 senkrecht von der Bodenplatte 34 weg erstrecken. Entlang der Seitenwände 38a und 38b befindet sich eine umlaufende Leiste 40, die mit einem vorgegeben Abstand Y von der Bodenplatte 34 an den Seitenwänden 38a und 38b befestigt ist und somit einen Hohlraum zwischen Leiste 40 und Bodenplatte 34 bildet.

Die Bodenplatte 34, die beiden Seitenwände 38a und 38b und die Leiste 40 bestehen aus einem nicht magnetisierbaren Material, insbesondere aus Kunststoff.

Wie insbesondere in Fig. 1 zu erkennen ist, entspricht der Abstand Y zwischen Leiste 40 und Bodenplatte 34 in etwa der Dicke des Führungselements 22, wobei der Abstand Y zwischen Leiste 40 und Bodenplatte 34 geringfügig größer ist, um das Führungselement 22 mit Spiel in den Hohlraum des Basismoduls 28 einzuführen. Die über Eck verlaufende Leiste 40 ist an der Seite, die den Seitenwänden 38a, 38b entgegengesetzt liegt, im Eck abgeschrägt ausgebildet. Der dadurch gebildete abgeschrägte Abschnitt 42 der Leiste 40 ist mit einer magnetisierbaren Metallplatte 44 versehen. Der abgeschrägte Abschnitt 42 entspricht in seiner Breite und Höhe der Vorderseite des magnetischen Elements 32 des Führungsmoduls 16, wobei der abgeschrägte Abschnitt 42 der Leiste 40 geringfügig größer ist als die Vorderseite des magnetischen Elements 32 des Führungsmoduls 16, so dass das magnetische Element 32 plan an dem abgeschrägten Abschnitt 42 der Leiste 40 anliegt.

Das magnetische Element 32 und die magnetisierbare Platte 44 sind so aufeinander abgestimmt, dass sie eine magnetische Verbindung ausbilden. Entscheidend ist, dass zwischen dem Führungsmodul 16 und dem Basismodul 18 eine lösbare magnetische Verbindung besteht, so dass alternativ anstelle des magnetischen Elements 32 auf dem Führungsmodul ein magnetisierbares Element und auf dem Basismodul anstelle der magnetisierbaren Platte eine magnetische Platte aus einem ferromagnetischen Stoff vorgesehen sein kann.

Das magnetische Element 32 des Führungsmoduls 16 ist mit einem Abstand X von der Spitze 27 positioniert, der geringfügig geringer als der Abstand zwischen magnetisierbarer Platte 44 und der aus den beiden Wandabschnitten 38a und 38b gebildeten Ecke 43 ist. Hierdurch ist sichergestellt, dass das magnetische Element 32 an der magnetisierbaren Platte anliegt.

In Fig. 4 sind das Führungsmodul 16 und das Basismodul 18 in verbundenem Zustand gezeigt. Der vordere Abschnitt 26 des Führungsmoduls 16 wird in das Basismodul 18 eingeführt, indem das Führungselement 22 in den Zwischenraum bzw. Hohlraum zwischen Leiste 44 und Basisplatte 34 greift. Im Detail werden Seitenabschnitte 45 des vorderen Abschnitts 26 des Führungselements 22 in den Zwischenraum bzw. Hohlraum zwischen Leiste 44 und Basisplatte 34 geschoben. Hierdurch bildet sich eine formschlüssige Verbindung zwischen dem Führungsmodul 16 und dem Basismodul 18. Da die Position des Magnetelements 32 und der magnetisierbaren Platte 44 so gewählt ist, dass das magnetische Element 32 des Führungsmoduls 16 an die magnetisierbare Platte 44 des Basismoduls 18 anstößt, wenn das Führungselement 22 sich in dem Zwischenraum des Basismoduls 18 befindet, wird neben der formschlüssigen Verbindung auch eine magnetische Verbindung ausgebildet.

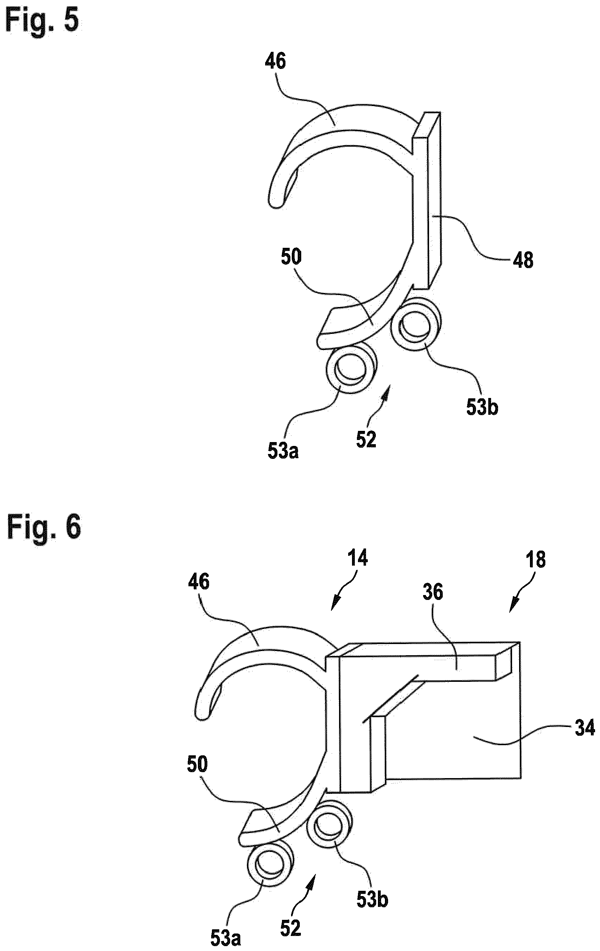

Fig. 5 zeigt das Befestigungsmodul 14. Das Befestigungsmodul 14 weist ein erstes Befestigungselement 46 in Form eines Hakens auf. Weiterhin umfasst das Befestigungsmodul 14 ein Verbindungselement 48, welches an der Seitenwand 38b des Basismoduls 18 befestigt werden kann. Weiterhin ist unterhalb des Hakens ein von dem Verbindungselement 48 wegweisender Arm 50 vorgesehen, an dem sich zwei ringförmige Halteelemente 52 in Form von Ösen 53a, 53b befinden. Die Ösen 53a, 53b können beispielsweise die Funktion eines Steuerelements übernehmen.

In Fig. 6 ist das in Fig. 5 dargestellte Befestigungsmodul 14 zusammen mit dem daran befestigten Basismodul 18 gezeigt.

Zur Verwendung des Befestigungssystems 10 wird zunächst die Teleskopstange 20 in den Anschluss 24 eingefügt und damit fest verbunden. Unabhängig davon werden das Befestigungsmodul 14 und das Basismodul 18 an dem Verbindungselement 48 des Befestigungsmoduls 14 und der Seitenwand 38b des Basismoduls 18 fest miteinander verbunden. Die beiden Module können entweder miteinander verklebt, verklipst sein oder miteinander verschraubt werden. Bei einer nicht dargestellten Ausführungsform können das Befestigungsmodul und das Basismodul auch einstückig ausgebildet sein.

An den Ösen 53a, 53b kann ein Gegenstand befestigt werden, der auf eine bestimmte Höhe gebracht werden soll. Beispielsweise kann ein Seil 60a durch eine der beiden Ösen 53a, 53b gezogen werden.

Das Seil 60a kann beispielsweise Teil eines Sonnensegels sein, welches in einer bestimmten Höhe befestigt werden soll. Da zwei Ösen 53a, 53b bei dieser Ausführungsform vorgesehen sind, kann ein weiteres Seil 60b in der anderen Öse 53b mitgeführt werden, um entweder die Montage zu erleichtern oder das Sonnensegel zusätzlich zu befestigen.

Das Basismodul 18 wird dann auf das Führungselement 16 aufgeschoben, wobei das Führungselement 22 mittels der Arretiervorrichtung 36 eine formschlüssige Verbindung sowie mittels der magnetischen Elemente 32, 44 eine magnetische Verbindung bildet. Hierdurch wird sichergestellt, dass eine stabile und drehsichere Verbindung zwischen dem Basismodul 18 und dem Führungsmodul 16 entsteht.

Nun kann mittels des Teleskopstabs 20 das Befestigungsmodul 14 an der gewünschten Stelle eines Objekts oder Trägerelements angebracht werden, beispielsweise an einem geeigneten Vorsprung an einer Hauswand. Befindet sich das Befestigungsmodul 14 sicher an dem entsprechenden Trägerelement, kann das Führungsmodul 16 wieder aus dem Basismodul 18 herausgezogen werden, indem das Führungselement 22 aus der Arretiervorrichtung 36 herausgezogen wird. Voraussetzung hierfür ist, dass die Kraft, die nötig ist, um das Führungsmodul 16 aus dem Basismodul 18 herauszuziehen, geringer ist als die Stabilitätsgrenze des Befestigungsmoduls 14 bzw. Basismoduls 16. Weiterhin muss sichergestellt sein, dass die Kraft, die notwendig ist, um das Führungsmodul 16 aus dem Basismodul 18 herauszuziehen, so gering ist, dass das Befestigungsmodul 14 keine Verformung oder Beschädigung an dem Trägerelement verursacht.

Da das Basismodul 16, wie in Fig.4 zu erkennen ist, haubenförmig auf dem vorderen Abschnitt 26 des Führungselements 22 anliegt, ist zum Lösen des Führungsmoduls 16 aus dem Basismodul 18 im Wesentlichen nur die Kraft notwendig, die zum Lösen der magnetischen Verbindung benötigt wird.

Ist das Befestigungsmodul 14 nun an dem gewünschten Trägerelement befestigt, können beispielsweise Sonnensegel, die mit den Seilen 60 verbunden sind, hochgezogen werden, so dass die Sonnensegel mittels des Befestigungsmoduls 14 an der gewünschten Stelle gehalten werden können.

Zum Entfernen der Befestigungsmodule 14 an den Trägerelementen wird das mit einem Teleskopstab 20 versehene Führungsmodul 16 in das Basismodul 18 eingeführt. Sobald eine feste magnetische Verbindung zwischen dem Basismodul 18 und dem Führungsmodul 16 besteht, kann das Befestigungsmodul 14 wieder von dem Trägerelement entfernt werden. Die Seile 60a, 60b können hierbei als Führungshilfe für das Führungsmodul 16 dienen, um das Führungselement 22 des Führungsmoduls 16 mit der Arrtiervorrichtung 36 des Basismoduls 18 zu verbinden.

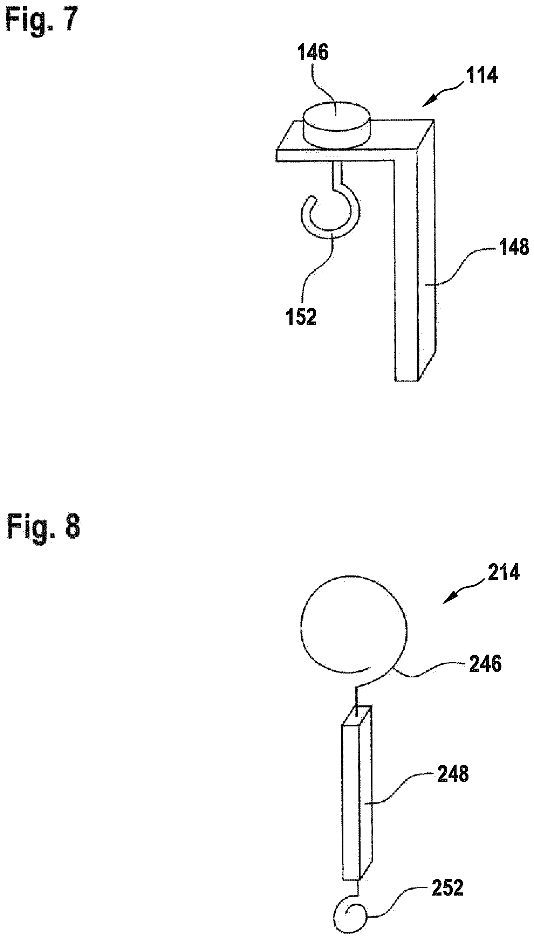

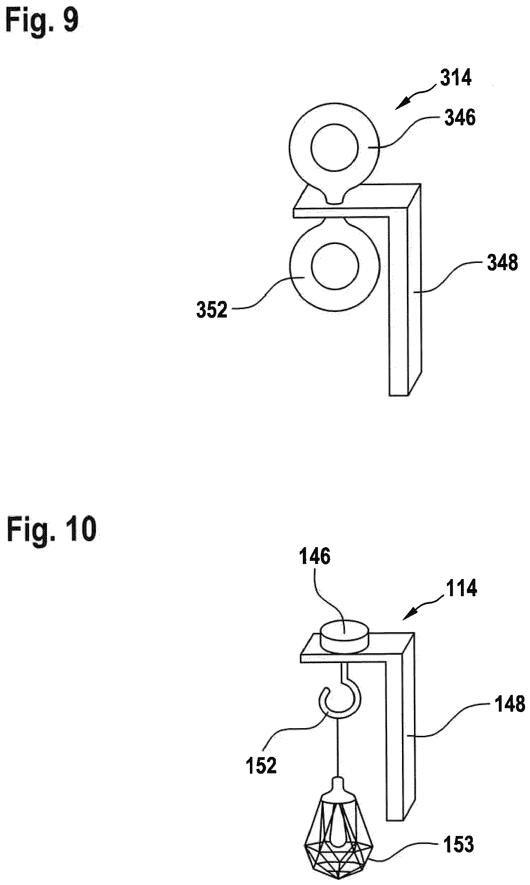

In Fig. 7 ist eine alternative Ausführungsform eines Befestigungsmoduls 114 gezeigt. Das Befestigungselement 146, welches geeignet ist, um das Befestigungsmodul 114 an einem Trägerelement zu befestigen, besteht in diesem Fall aus einem magnetischen Element. Das Haltelement 152, an dem ein zu befestigender Gegenstand angebracht werden kann, ist als Haken ausgebildet. Beispielsweise kann an dem Haken eine Laterne 153 oder dergleichen befestigt werden (siehe Fig. 10). Das magnetische Element und der Haken sind hier über eine L-förmige Haltekonstruktion 148 fest mit dem Basismodul 18 verbindbar.

Die Montage bzw. Demontage eines Gegenstandes mit Hilfe dieses Befestigungsmoduls 114 erfolgt in gleicher Art und Weise, wie sie in Zusammenhang mit dem in Fig. 5 dargestellten Befestigungsmodul 14 beschrieben wurde.

Fig. 8 zeigt eine Ausführungsform eines Befestigungsmoduls 214 mit einem Haken als Befestigungselement 246 und mit einem Haken als Halteelement 252. Das Befestigungselement 246 und das Halteelement 252 sind an den Stirnseiten einer Halteplatte 248 befestigt, wobei die Halteplatte 248 wiederum mit der Seitenwand 38b des Basismoduls 18 fest verbindbar ist.

Fig. 9 zeigt eine Ausführungsform eines Befestigungsmoduls 314, bei der sowohl das Befestigungselement 346 als auch das Halteelement 352 als Ösen ausgebildet sind. Das Befestigungselement 346 und das Halteelement 352 sind hier über eine L-förmige Haltekonstruktion 348 fest mit dem Basismodul 18 verbindbar.

Gerade beim Entfernen der Befestigungsmodule 14; 114; 214; 314 von Trägerelementen kann es schwierig sein, das Befestigungsmodul 14; 114; 214; 314 aus seiner Position herauszubekommen. Hierfür sind gegebenenfalls zusätzliche Hilfsmittel notwendig. Auch kann der Wunsch bestehen, nachträglich an das bereits an einem Trägerelement befestigte Befestigungsmodul 14; 114; 214; 314 etwas anzubringen. Um nachträglich Hilfsmittel 54 an das bereits an einem Trägerelement befestigte Befestigungsmodul 14; 114; 214; 314 anzubringen, ist der Schlitz 30 im Führungsmodul 16 vorgesehen. Der Schlitz 30 wirkt als Aufnahmemittel mit Hilfe dessen zusätzliche Hilfsmittel 54, beispielsweise zusätzliche Seile und Haken, an dem Führungsmodul 16 verankert werden können, die dann wiederum mit dem an einem Trägerelement befestigten Befestigungsmodul 14; 114; 214; 314 oder mit dem entsprechenden Basismodul 18 wechselwirken.

Bei einer nicht dargestellten Ausführungsform des Basismoduls kann die Arretiervorrichtung im abgewinkelten Bereich eine Tasche für den vordersten Abschnitt des vorderen Teils aufweisen, wobei dann die Seiten des Führungselements an den Leisten anschlagen. Bei dieser Ausführungsform sind die Leisten mit der Bodenplatte verbunden.

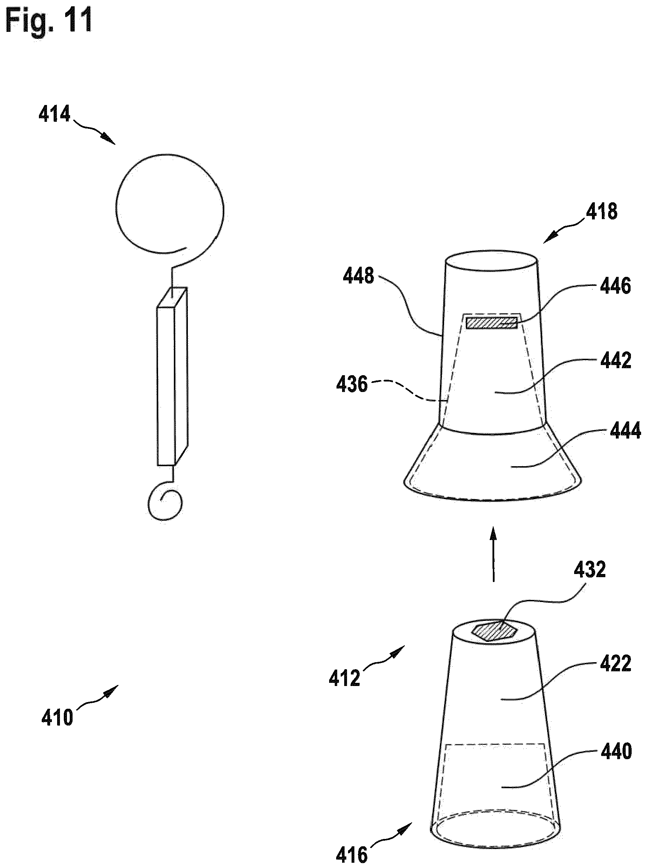

Fig. 11 zeigt eine zweite Ausführungsform eines Befestigungssystems 410 mit einer Montagehilfe 412 und einem Befestigungsmodul 414. Die Montagehilfe 412 umfasst ein Führungsmodul 416 und ein Basismodul 418. Wenn auch nicht dargestellt, so kann das Führungsmodul 416 mit einem Teleskopstab verbunden werden.

Bei dieser Ausführungsform ist das Führungselement 422 stabförmig mit zwei entgegengesetzt liegenden Enden ausgebildet, wobei an einem Ende ein Anschluss 440 für einen Stab, insbesondere Teleskopstab vorgesehen ist und an dem anderen Ende ein magnetisches Element 432 befestigt ist. In Richtung des magnetischen Elements 432 ist das Führungselement 422 sich konisch verjüngend ausgebildet. Im Querschnitt ist das Führungselement 442 rund gestaltet.

Das magnetische Element 432 befindet sich an der Stirnseite des Führungselements 422 und kann rund oder eckig ausgebildet sein.

Das Basismodul 418 ist rohrförmig mit zwei entgegengesetzt liegenden Rohrendabschnitten ausgebildet, wobei ein Rohrendabschnitt geschlossen ist, so dass im Innern des Basismoduls 418 ein sich in Längsrichtung des Basismoduls 418 erstreckender Hohlraum 442 ergibt, der Teil einer Arretiervorrichtung 436 ist. Der Hohlraum 442 weist einen runden Querschnitt auf. Die Kontur des Hohlraums 442 ist an die Außenkontur des Führungselements 422 angepasst, so dass zwischen Führungselement 422 und Hohlraum 442 ein geringes Spiel besteht.

An dem offenen Ende des Basismoduls 418 befindet sich eine trichterförmige Erweiterung 444, die als Einführhilfe für das Führungselement 422 dient.

An der hinteren Wand des Hohlraums 442 befindet sich ein magnetisierbarer Einsatz 446, insbesondere magnetisierbarer Metalleinsatz, der mit dem magnetischen Element 432 des Führungselements 422 wechselwirkt, um eine magnetische Verbindung auszubilden. Der magnetisierbare Einsatz 446 ist hier komplementär zu dem magnetischen Element 432 gestaltet, wobei dies nicht zwingend notwendig ist.

An der Außenseite des Basismoduls 418 weist das Basismodul 418 eine Befestigungsfläche 448 auf, an der das Befestigungsmodul 414 befestigbar ist. Das Befestigungsmodul 414 entspricht in seinem Aufbau dem in Fig. 7 dargestellten Befestigungsmodul 214. Wenn auch nicht dargestellt, so können auch andere Befestigungsmodule an dem Basismodul 418 angebracht werden.

Um das Führungsmodul 416 mit dem Basismodul 418 zu verbinden, wird das stabförmige Führungselement 422 in den Hohlraum 442 des Basismoduls 418 eingeführt, wodurch eine formschlüssige Verbindung entsteht. Darüber hinaus bildet das am Führungselement 422 befestigte magnetische Element 432 mit dem Metalleinsatz im Innern des Basismoduls eine magnetische Verbindung.

Die Funktionsweise des in Fig. 11 dargestellten Befestigungssystems 410 ist somit analog zu den in den Fig. 1 bis 10 dargestellten Befestigungssystemen.

Bei der dargestellten Ausführungsform ist der Querschnitt durch das Führungselement 422 rund. Bei einer nicht dargestellten Ausführungsform ist der Querschnitt durch das Führungselement oval oder eckig, wodurch eine zusätzliche Verdrehsicherung zwischen Führungsmodul und Basismodul erreicht werden kann. Es versteht sich, dass in diesem Fall der Querschnitt des Hohlraums komplementär ausgebildet ist.

Im Rahmen der Erfindung sind auch nicht dargestellte Ausführungsformen umfasst, die Merkmale der dargestellten Ausführungsformen kombinieren, wobei hierbei auch einzelne Merkmale weggelassen werden können.

## Patentansprüche

1. Befestigungssystem umfassend eine Montagehilfe (12; 412) und ein Befestigungsmodul (14; 114; 214; 314), wobei die Montagehilfe (12; 412) ein Führungsmodul (16; 416) mit einem Führungselement (22; 422) sowie ein Basismodul (18; 418) mit einer Arretiervorrichtung (36; 436) umfasst, wobei das Basismodul (18; 418) mit dem Befestigungsmodul (14; 114; 214; 314; 414) fest verbunden ist, wobei an dem Basismodul (18; 418) oder dem Befestigungsmodul (14; 114; 214; 314; 414) wenigstens ein Haltelement (52; 152; 252; 352) vorgesehen ist und wobei das Basismodul (18; 418) und das Führungsmodul (16; 416) mittels einer magnetischen Verbindung lösbar miteinander verbunden sind.

2. Befestigungssystem nach Anspruch 1, **dadurch gekennzeichnet, dass** das Führungsmodul (16; 416) und das Basismodul (18; 418) mittels der lösbaren magnetischen Verbindung und mittels einer lösbaren formschlüssigen Verbindung miteinander verbindbar sind.

3. Befestigungssystem nach einem der vorhergehenden Ansprüche, **dadurch gekennzeichnet, dass** das Führungsmodul (16; 416) ein erstes magnetisches Element (32; 432) und das Basismodul (18; 418) ein zweites Element, das magnetisierbar oder magnetisch ist, aufweisen oder dass das Basismodul (18; 418) ein erstes magnetisches Element und das Führungsmodul (16; 416) ein zweites Element, das magnetisierbar oder magnetisch ist, aufweisen.

4. Befestigungssystem nach einem der vorhergehenden Ansprüche, **dadurch gekennzeichnet, dass** das Führungselement (22; 422) und/oder die Arretiervorrichtung (36; 436) des Basismoduls (18; 418) aus einem nicht magnetisierbaren Material bestehen.

5. Befestigungssystem nach einem der vorhergehenden Ansprüche, **dadurch gekennzeichnet, dass** das Führungsmodul (16; 416) eine Führungsstange aufweist, wobei die Führungsstange vorzugsweise eine Teleskopstange (20) ist.

6. Befestigungssystem nach einem der vorhergehenden Ansprüche, **dadurch gekennzeichnet, dass** das Basismodul (18; 418) haubenartig mit dem Führungsmodul (14; 414) verbindbar ist.

7. Befestigungssystem nach einem der vorhergehenden Ansprüche, **dadurch gekennzeichnet, dass** das Führungselement (22; 422) einen plattenförmigen oder einen stabförmigen Grundkörper aufweist.

8. Befestigungssystem nach einem der vorhergehenden Ansprüche, **dadurch gekennzeichnet, dass** das Basismodul (18; 418) ein magnetisierbares oder magnetisches Element (42; 442) aufweist, das an der Arretiervorrichtung (36; 436) befestigt ist.

9. Befestigungssystem nach einem der vorhergehenden Ansprüche, **dadurch gekennzeichnet, dass** das Basismodul (18; 418) eine Einführhilfe aufweist.

10. Befestigungssystem nach einem der vorhergehenden Ansprüche, **dadurch gekennzeichnet, dass** das Befestigungsmodul (14; 114; 214; 314; 414) ein erstes Befestigungselement (46; 146; 246; 346) geeignet zur Befestigung eines Befestigungsmoduls (14; 114; 214; 314; 414) an einem Trägerelement und das wenigstens eine Halteelement (52; 152; 252; 352) umfasst.

11. Befestigungssystem nach einem der Ansprüche 1 bis 9, **dadurch gekennzeichnet, dass** das Befestigungsmodul ein erstes Befestigungselement geeignet zur Befestigung an einem Trägerelement und das Basismodul das wenigstens eine Halteelement umfassen.

12. Befestigungssystem nach Anspruch 10 oder 11, **dadurch gekennzeichnet, dass** das Befestigungselement (46; 146; 246, 346) einen Haken, eine Öse (53a, 53b) oder ein Element einer magnetischen Verbindung umfasst.

13. Befestigungssystem nach einem der vorhergehenden Ansprüche, **dadurch gekennzeichnet, dass** das wenigstens eine Halteelement (52; 152; 252; 352) einen Haken (53a, 53b) oder eine Öse (53a, 53b) aufweist.

14. Befestigungssystem nach einem der vorhergehenden Ansprüche, **dadurch gekennzeichnet, dass** ein mechanisches Steuerungselement vorgesehen ist.

15. Befestigungssystem nach einem der vorhergehenden Ansprüche, **dadurch gekennzeichnet, dass** in dem Führungselement (22) Aufnahmemittel vorgesehen sind.
